# EUROPÄISCHE PATENTSCHRIFT

(11) **EP 0 453 407 B1**
(45) Veröffentlichungstag und Bekanntmachung des Hinweises auf die Patenterteilung: **01.12.1993**
(21) Anmeldenummer: 91810274.0
(22) Anmeldetag: 12.04.1991
(51) Int. Cl.: B65B 23/14, B65B 35/50, B65G 43/08

(54) **Verfahren und Vorrichtung zur Bildung von Gruppen von Nahrungsmittelscheiben**
Method and device for making groups of disc-shaped foodstuffs
Procédé et dispositif de formation de groupes de produits alimentaires en forme de disques

(30) Priorität: 23.04.1990 CH 1361/90
(43) Veröffentlichungstag der Anmeldung: 23.10.1991
(73) Patentinhaber: SIG Schweizerische Industrie-Gesellschaft, 8212 Neuhausen am Rheinfall (CH)
(72) Erfinder: Fluck, René, CH-8226 Schleitheim (CH)
(74) Vertreter: Münch, Otto

(56) Entgegenhaltungen:
- EP-A- 0 312 490
- GB-A- 1 328 331
- GB-A- 2 218 679

## Beschreibung

Ein Verfahren und eine Vorrichtung gemäss Oberbegriff des Anspruchs 1 ist aus der CH-PS 521'265 bekannt. Bei dieser Vorrichtung werden auf einem Förderband aus einem Teppich von nebeneinanderliegenden Biscuits zunächst Kolonnen gebildet und die Biscuits anschliessend mittels umlaufender Greiffinger gestaut. Die Finger transportieren die Biscuits über eine stufe. Wenn unterhalb der Stufe zwei Biscuits aufeinanderliegen, werden diese mittels eines Schiebers in Gruppenbildungskammern geschoben, wo Stapel gebildet werden. Diese Vorrichtung hat sich bewährt. Nachteilig ist allerdings, dass sie eine Kolonnenbildung und eine Führung sowie ein Aufstauen der Biscuits erfordert. Dies begrenzt einerseits die Kapazität der Vorrichtung, andererseits müssen die Biscuits relativ robust sein. Für bruchempfindliche Biscuits und gewisse Biscuitformen ist diese Vorrichtung weniger geeignet.

Ein Verfahren und eine Vorrichtung zur Bildung von Gruppen von Nahrungsmittelscheiben aus einem in einer Förderrichtung geförderten Teppich von nebeneinanderliegenden Scheiben ist aus der GB-A-2 218 679 bekannt. Diese Vorrichtung weist einen sensor zur Erfassung der Lage der Scheiben und stomabwärts davon eine Greifeinrichtung zur Hochhebung einer Scheibengruppe auf.

Der vorliegenden Erfindung liegt die Aufgabe zugrunde, ein Verfahren und eine Vorrichtung der eingangs genannten Art derart weiterzubilden, dass eine hohe Leistung bei schonender Handhabung der Nahrungsmittelscheiben erreicht wird. Diese Aufgabe wird durch die kennzeichnenden Merkmale der Ansprüche 1 und 6 gelöst.

Nachfolgend wird ein Ausführungsbeispiel der Erfindung anhand der Zeichnung erläutert. Darin zeigt:
- Fig. 1: eine schematische Draufsicht auf die Vorrichtung,
- Fig. 2: eine schematische perspektivische Ansicht eines Teils der Vorrichtung,
- Fig. 3: eine Stirnansicht einer Greifeinrichtung,
- Fig. 4: eine Seitenansicht der Greifeinrichtung nach Fig. 3, und
- Fig. 5: eine schematische perspektivische Darstellung einer zweiten Ausführungsform.

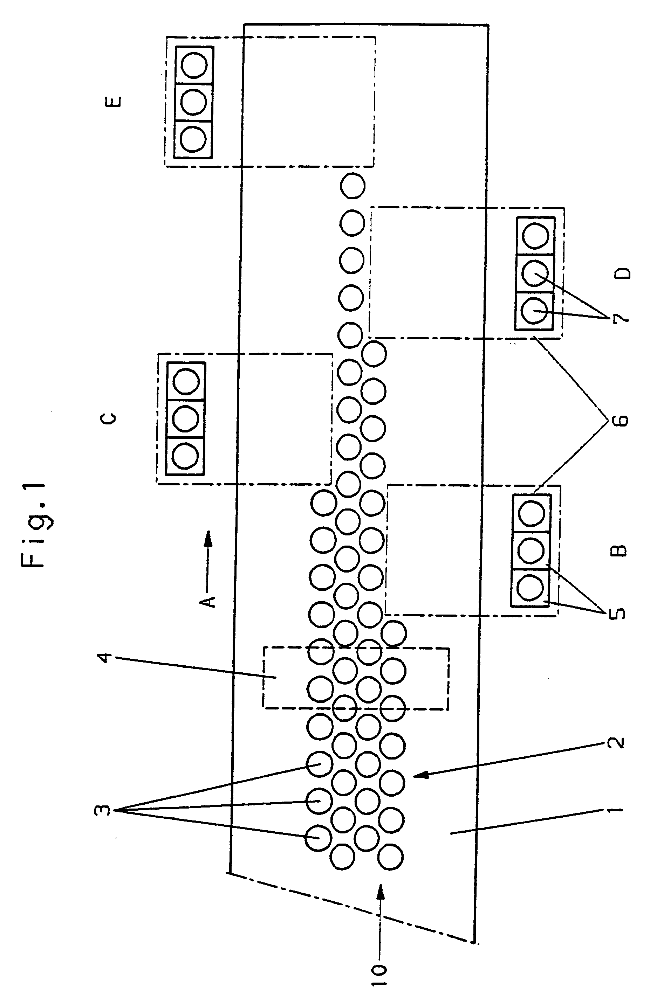

In Fig. 1 ist das Grundprinzip der Erfindung nur schematisch vereinfacht dargestellt: Auf einem Förderband 1 wird ein aus einem Backofen angelieferter Teppich 2 von nebeneinander und hintereinander mit etwas Abstand voneinander angeordneten Biscuits 3 in Förderrichtung A transportiert. In einer Fühlerstation 4 mit einer Anzahl von Reflexlichtschranken wird die Position der Biscuits auf dem Band 1 erfasst. Stromabwärts der Fühlerstation 4 sind beidseits des Bandes 1 nacheinander mehrere Stationen B, C, D, E von nur angedeuteten Greifeinrichtungen angeordnet, welche den Teppich 2 sukzessive abbauen und die Biscuits 3 in Gruppenbildungskammern 5 flachliegend aufeinander stapeln. Die Gruppenbildungskammern 5 sind in Fig. 1 schematisch als Verpackungsbehälter dargestellt, die je drei Stapel 7 von Biscuits 2 enthalten. Der in Förderrichtung A abnehmenden Menge von Biscuits 3 im Teppich 2 bei den Stationen B, C, D, E entspricht also eine zunehmende Menge von Biscuits in den Gruppenbildungskammern 5.

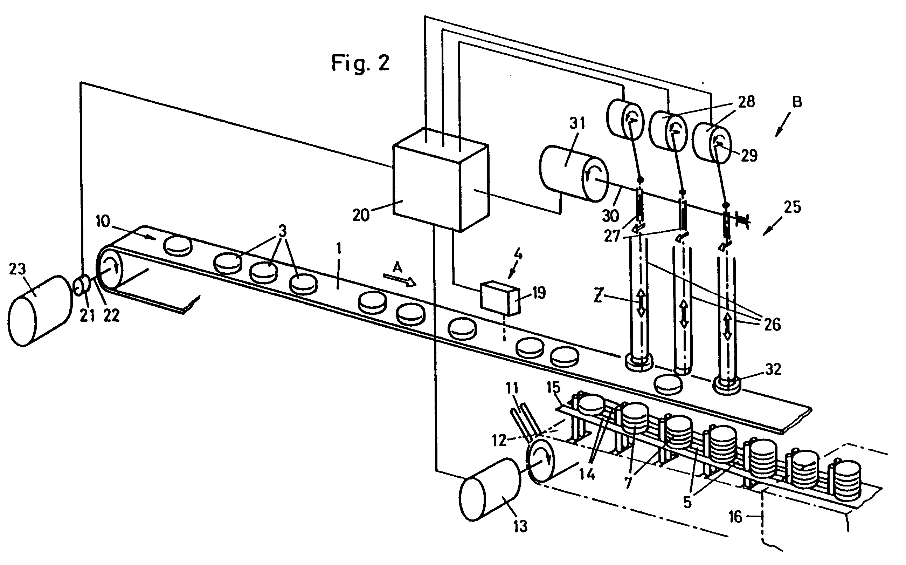

In Fig. 2 ist die Vorrichtung schematisch perspektivisch dargestellt, wobei vom Förderband 1 nur der äusserste Rand, vom Teppich 2 nur die äusserste Kolonne 10 und von den mehreren Stationen B, C, D, E nur die Station B vereinfacht dargestellt sind. Die Gruppenbildungskammern 5 werden hier durch Zwischenräume zwischen gabelförmigen Schiebern 11 gebildet. Die Schieber 11 sind auf einem Transportband 12 in regelmässigen Abständen befestigt. Das Band 12 wird durch einen Motor 13 angetrieben. Die Zinken der Schieber 11 ragen durch Schlitze 14 in einer geneigten Rampe 15. Die Schieber 11 führen die gebildeten Stapel 7 z.B. einer nur schematisch angedeuteten Verpackungsmaschine 16 zu, gegebenenfalls über eine Speicherstrecke.

Von der Fühlerstation 4 ist nur die äusserste Lichtschranke 19 dargestellt, welche die Biscuits 3 der äussersten Kolonne 10 abtastet und deren Lage auf dem Band 1 einer Steuereinrichtung 20 meldet. Zur Korrelation erhält die Steuereinrichtung 20 ausserdem das Signal eines Drehwinkelgebers 21, der mit der Welle 22 des Antriebsmotors 23 des Bandes 1 gekuppelt ist. Die vereinfacht dargestellte Greifeinrichtung 25 in der Station B umfasst drei in Förderrichtung A nacheinander angeordnete Greifer 26. Die Greifer 26 sind in je einer Längsführung 27 in Höhenrichtung Z verschiebbar geführt und können durch je einen Motor 28 über eine Kurbel 29 angehoben und abgesenkt werden. Die drei Führungen 27 sind auf einer gemeinsamen, parallel zum Band 2 und zur Förderrichtung A verlaufenden Welle 30 montiert. Die Welle 30 kann durch einen Motor 31 verschwenkt werden. Jeder Greifer 26 hat unten einen Saugnapf 32, der an ein nicht dargestelltes Sauggebläse angeschlossen ist. Die Motoren 13, 28 und 31 sind mit der Steuereinrichtung 20 verbunden.

Im Betrieb arbeitet die dargestellte Vorrichtung wie folgt: Die in unregelmässigen Abständen auf dem Band 1 laufenden Biscuits 3 werden von der Lichtschranke 19 erfasst und ihre Position auf dem Band 1 mittels des Signals des Drehwinkelgebers 21 in der Steuereinrichtung 20 gespeichert. Wenn das vorderste Biscuit 3 die Lage des stromabwärtigen Greifers 26 erreicht hat, schaltet die Steuereinrichtung 20 dessen Motor 28 ein, so dass dieser Greifer 26 abgesenkt wird und sein Saugnapf 32 dieses Biscuit 3 vom Band 1 abhebt. Die beiden nächstfolgenden Biscuits 3 werden durch die andern beiden Greifer 26 in gleicher Weise ergriffen. Sobald alle drei Greifer 26 je ein Biscuit ergriffen haben, schwenkt der Motor 31 die drei Greifer 26 gemeinsam in eine Stellung oberhalb der Gruppenbildungskammern 5, und die Vakuumzufuhr zu den Greifern 26 wird kurzfristig unterbrochen, so dass die Biscuits 3 auf die sich bildenden Stapel 7 abgesetzt werden. Die Greifer 26 werden mittels des Motors 31 zurückgeschwenkt, um die nächsten Biskuits 3 der Kolonne 10 in gleicher Weise zu erfassen. Nach jedem oder nach jedem zweiten dieser Schritte wird das Band 12 mittels des Motors 13 um eine Kammerlänge weitertransportiert. Bei der in Fig. 1 angedeuteten Variante, wo Verpackungsbehälter 6 gefüllt werden, können alternativ diese Behälter 6 an der gleichen Position stehen bleiben, bis sie gefüllt sind, und anschliessend durch leere Behälter 6 ersetzt werden.

Die beschriebene Vorrichtung kann mit sehr hoher Geschwindigkeit arbeiten, weil die Biscuits 3 nicht gestaut werden müssen und während ihres Transportes in Richtung A ergriffen werden. Es ist keine Ausrichtung erforderlich, so dass die Biscuits direkt in der Anordnung ergriffen werden können, wie sie z.B. vom Backofen oder einer vorangehenden Behandlungsmaschine geliefert werden. Da keine Staustrecken nötig sind, werden die Biscuits sehr schonend behandelt, so dass die Vorrichtung auch bruchempfindliche Biscuits stapeln kann. Durch den Wegfall von Ausricht- und Staustrecken, und weil mehrere Greifer 26 gemeinsam geschwenkt werden, ist die Baulänge verglichen mit herkömmlichen Stapelvorrichtungen kurz. Ausserdem kann eine sehr hohe Betriebssicherheit erreicht werden, indem stromabwärts der regulären Greifeinrichtungen 25 eine Reserve-Greifeinrichtung 25 angeordnet wird, welche mehrere Kolonnen 10 bedienen kann. Bei Ausfall einer der Greifeinrichtungen 25 kann dann diese Reserve-Greifeinrichtung deren Aufgabe übernehmen. Auch einzelne, nicht erfasste Biscuits können von dieser Reserve-Greifeinrichtung erfasst werden, wenn z.B. an jedem Greifer 26 noch ein Vakuumfühler montiert wird, der das korrekte Ergreifen eines Biscuits 3 der Steuereinrichtung 20 meldet. Die beschriebene Vorrichtung hat einen modularen Aufbau, so dass sie preiswert herstellbar ist. Es ist beispielsweise auch möglich, mit einer zusätzlichen, nachgeschalteten Greifeinrichtung 25 eine Stapelergänzung nach einer Kontrolle des Gewichts oder der Länge der Stapel 7 vorzunehmen. Dieser nachgeschalteten Greifeinrichtung 25 könnte gesteuert durch die Steuereinrichtung 20 jeweils die erforderliche Anzahl Biscuits 3 durch eine der vorgeschalteten Greifeinrichtungen 25 zugeführt werden, indem diese Greifeinrichtung die betreffende Anzahl Biscuits überspringt.

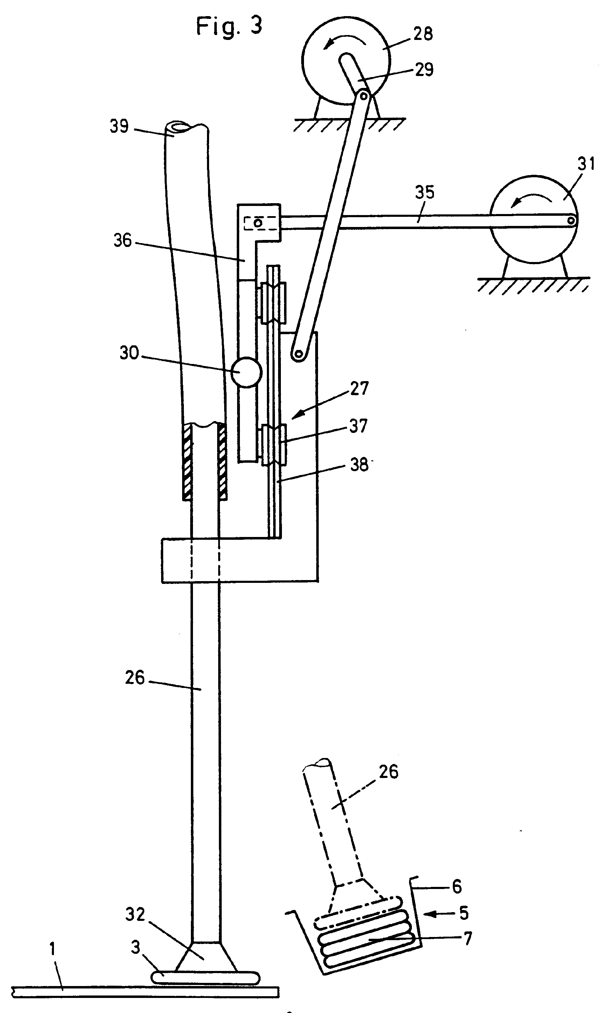

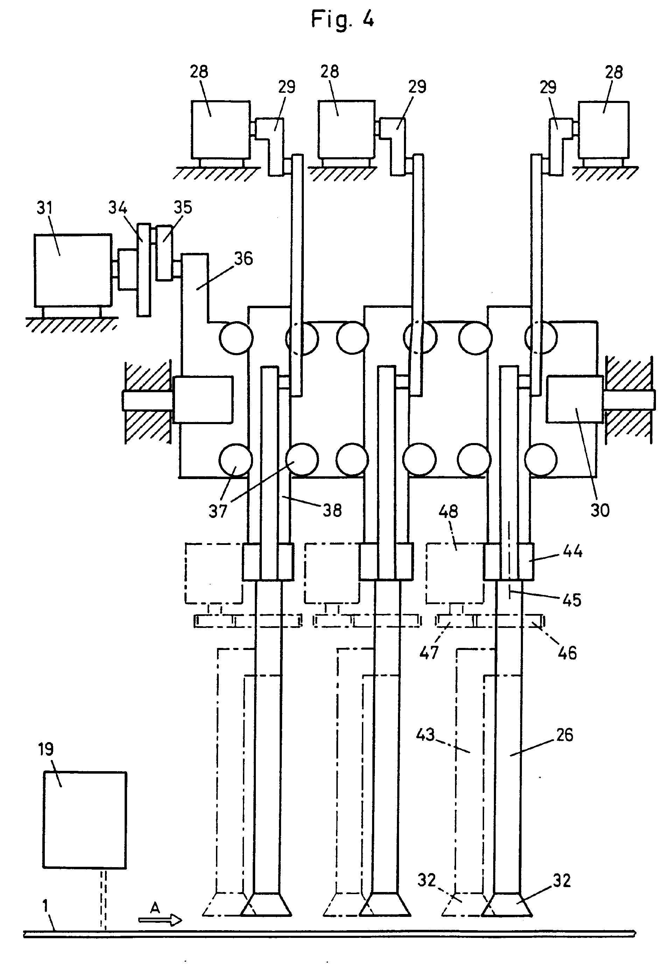

In den Fig. 3 und 4 ist die Greifeinrichtung 25 nach Fig. 2 detaillierter dargestellt. Der Motor 31 verschwenkt die Achse 30 mittels einer Kurbel 34, einer Schubstange 35 und eines Hebels 36 bei einer halben Umdrehung in die in Fig. 3 strichpunktiert dargestellte Lage der Greifer 26. Die Führung 27 besteht aus zwei Paaren von Keil-Rollen 37, in welchen eine V-Schiene 38 geführt ist. Die Gruppenbildungskammern 5 sind hier wiederum als Verpackungsbehälter 6 dargestellt. Der rohrförmige Greifer 26 ist über einen Schlauch 39 mit der Vakuumquelle verbunden.

In Fig. 4 ist gestrichelt noch eine Variante dargestellt, in welcher die Saugnäpfe 32 der Greifer 26 einzeln quer zur Förderrichtung A verschiebbar sind. Dazu sind die Rohre 43 der Greifer 26 unterhalb eines Drehlagers 44 doppelt abgekröpft, so dass die Saugnäpfe 32 exzentrisch zur Drehachse 45 sind. Unterhalb des Lagers 44 ist auf dem Rohr 43 ein Zahnrad 46 befestigt, das mit einem Ritzel 47 kämmt. Das Ritzel 47 wird durch einen weiteren Motor 48 angetrieben. Mittels des Motors 48 kann daher der Saugnapf 32 quer zur Transportrichtung A verschoben werden. Dies ist nützlich, wenn der Teppich 2 von Biscuits 3 nicht aus Kolonnen 10 besteht. Zur Steuerung der Motoren 48 muss dann die Fühlerstation 4 auch Signale für die Position der Biscuits quer zur Transportrichtung A liefern. Dies ist möglich z.B. durch den Einbau einer wesentlich grösseren Anzahl von Lichtschranken 19 oder einer Fernsehkamera mit entsprechender Auswertung.

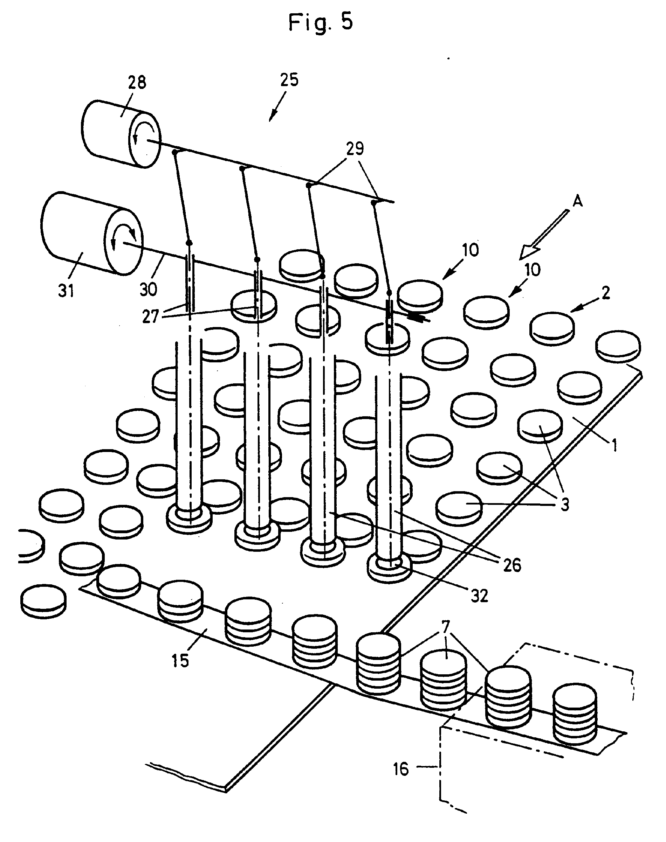

Bei der Ausführungsform nach Fig. 5 sind analoge Teile mit gleichen Bezugszeichen versehen, so dass sich eine detaillierte Erläuterung dieser Teile erübrigt. Bei dieser Ausführungsform sind die Rampe 15 und die Achse 30 quer zur Förderrichtung A angeordnet. Die Rampe 15 verläuft oberhalb des Bandes 1. Der Teppich 2 besteht aus ausgerichteten Reihen und Kolonnen 10, so dass alle Greifer 26 der Greifeinrichtung 25 für die Hubbewegung einen gemeinsamen Motor 29 haben. Bei unregelmässigen Abständen der Biscuits 3 innerhalb der Kolonnen 10 müsste wie bei der Ausführungsform nach Fig. 2 bis 4 jeder Greifer 26 seinen eigenen Hubmotor haben.

## Patentansprüche

1. Verfahren zur Bildung von Gruppen (7) flachseitig aneinanderliegender Nahrungsmittel-Scheiben (3), insbesondere Biscuits, aus einem in einer Förderrichtung (A) Stetig geförderten Teppich (2) von nebeneinanderliegenden Scheiben (3) in Gruppenbildungskammern (5), dadurch gekennzeichnet, dass die Lage der Scheiben (3) innerhalb des Teppichs (2) mittels eines Fühlers (4,19) erfasst und gespeichert wird, und dass in Förderrichtung (A) stromabwärts des Fühlers (4, 19) die Scheiben (3) in mehreren aufeinanderfolgenden Stationen (B,C,D,E) einzeln erfasst und in die Gruppenbildungskammern (5) transportiert werden, derart, dass in Förderrichtung (A) die Menge der den Teppich (2) bildenden Scheiben (3) abnimmt und die Menge der in den Gruppenbildungskammern (5) enthaltenen Scheiben (3) zunimmt.

2. Verfahren nach Anspruch 1, dadurch gekennzeichnet, dass die Scheiben (3) während ihres Transportes in der Förderrichtung (A) erfasst werden.

3. Verfahren nach Anspruch 1 oder 2, dadurch gekennzeichnet, dass die Abnahmemenge der Scheiben (3) im Teppich (2) genau der Zunahmemenge in den Gruppenbildungskammern (5) entspricht.

4. Verfahren nach einem der Ansprüche 1 bis 3, dadurch gekennzeichnet, dass in einer Station (B) mehrere Einzelscheiben (3) des Teppichs (2) in unterschiedlichen Zeitpunkten erfasst und anschliessend gemeinsam zu den Gruppenbildungskammern (5) transportiert und gleichzeitig abgelegt werden.

5. Verfahren nach einem der Ansprüche 1 bis 4, dadurch gekennzeichnet, dass die Scheiben (3) nach dem Erfassen angehoben werden.

6. Vorrichtung zur Durchführung des Verfahrens nach Anspruch 1, umfassend ein in einer Förderrichtung (A) Stetig laufendes Transportband (1) für den Transport eines Teppichs (2) von nebeneinanderliegenden Nahrungsmittel-Scheiben (3), insbesondere Biscuits, sowie Gruppenbildungskammern (5) zum Bilden von Gruppen (7) der Scheiben (3), dadurch gekennzeichnet, dass oberhalb des Transportbandes (1) ein Fühler (4,19) angeordnet ist, um die Position der einzelnen Scheiben (3) auf dem Band (1) zu messen, dass in Förderrichtung (A) stromabwärts des Fühlers (4,19) nacheinander mehrere Greifeinrichtungen (25) in mehreren aufeinanderfolgenden Stationen (B,C,D,E) angeordnet sind, um die in Förderrichtung (A) stetig bewegten Scheiben (3) zu erfassen und in die Gruppenbildungskammern (5) zu transportieren, wobei die Greifeinrichtungen (25) durch eine Steuereinrichtung (20) gesteuert sind, die mit dem Fühler (4,19) verbunden ist.

7. Vorrichtung nach Anspruch 6, dadurch gekennzeichnet, dass jede Greifeinrichtung (25) mehrere Greifer (26) enthält, welche je einzeln je eine Scheibe (3) erfassen, und dass die Greifer (26) gemeinsam in eine Position über den Gruppenbildungskammern (5) verschiebbar sind.

8. Vorrichtung nach Anspruch 7, dadurch gekennzeichnet, dass der Fühler (4,19) zum Messen der Position der Scheiben (3) auf dem Band (1) sowohl in Förderrichtung (A) als auch quer dazu ausgebildet ist, und dass jeder Greifer (26) relativ zu den andern Greifern (26) derselben Greifeinrichtung (25) quer zur Förderrichtung (A) verschiebbar ist.

9. Vorrichtung nach Anspruch 7 oder 8, dadurch gekennzeichnet, dass die Greifer (26) jeder Greifeinrichtung (25) um eine zur Ebene des Förderbandes (1) parallele Schwenkachse (30) gemeinsam durch einen Schwenkantrieb (31) verschwenkbar sind.

10. Vorrichtung nach Anspruch 9, dadurch gekennzeichnet, dass für jeden Greifer (26) der Greifeinrichtung (25) an der Schwenkachse (30) eine Führung (27) angebracht ist, um die Hub- und Senkbewegung der Greifer (26) quer zur Schwenkachse (30) zu führen, und dass jedem Greifer (26) ein eigener Hubmotor (28) zugeordnet ist.

11. Vorrichtung nach einem der Ansprüche 6 bis 10, dadurch gekennzeichnet, dass das Förderband (1) mit einem Dekoder (21) und dieser mit der Steuereinrichtung (20) verbunden ist.

12. Vorrichtung nach einem der Ansprüche 6 bis 11, dadurch gekennzeichnet, dass die Bewegung des Förderbandes (1), die Schwenkbewegung der Schwenkachse (30), die Hubbewegungen der Greifer (26) und die Bewegung der Gruppenbildungskammern (5) durch die Steuereinrichtung (20) koordiniert sind.

## Claims

1. A method for forming groups (7) of flat-sided foodstuff discs (3) lying on top of each other, in particular biscuits, from a carpet (2), being continuously conveyed in a delivery direction (A), of adjacent-lying discs (3) in group forming chambers (5), characterised in that the position of the discs (3) within the carpet (2) is detected by means of a sensor (4,19) and stored and that the discs (3) are individually detected in several consecutive stations (B,C,D,E) in the delivery direction (A) downstream of the sensor (4,19) and are transported into the group forming chambers (5) in such a way that in the delivery direction (A) the quantity of the discs (3) forming the carpet (2) reduces and the quantity of the discs (3) contained in the group forming chambers (5) increases.

2. A method according to claim 1, characterised in that the discs (3) are detected during their transportation in the delivery direction (A).

3. A method according to claim 1 or 2, characterised in that the reduction in the number of discs (3) in the carpet (2) corresponds exactly to the increase in number in the group forming chambers (5).

4. A method according to one of claims 1 to 3, characterised in that several individual discs (3) of the carpet (2) are detected in one station (B) at different times and subsequently jointly transported to the group forming chambers (5) and simultaneously stored.

5. A method according to one of claims 1 to 4, characterised in that the discs (3) are raised after being detected.

6. A device for carrying out the method according to claim 1, comprising a conveying belt (1) running continuously in a delivery direction (A) for transporting a carpet (2) of adjacent-lying foodstuff discs (3) in particular biscuits, as well as group forming chambers (5) for the purpose of forming groups (7) of discs (3), characterised in that a sensor (4,19) is disposed above the conveying belt (1) in order to measure the position of the individual discs (3) on the belt (1), that successive gripping devices (25) are disposed in a plurality of successive stations (B,C,D,E) in the delivery direction (A) downstream of the sensor (4,19) in order to detect the discs (3) moving continuously in the delivery direction (A) and to transport said discs to the group forming chambers (5), wherein the gripping devices (25) are controlled by virtue of a control device (20), which is connected to the sensor (4,19).

7. A device according to claim 6, characterised in that each gripping device (25) contains a plurality of grippers (26), which grippers each take hold individually of one disc (3) and that the grippers (26) cab be displaced as one into a position above the group forming chambers (5).

8. A device according to claim 7, characterised in that the sensor (4,19) is designed for measuring the position of the discs (3) on the belt (1) both in the delivery direction (A) and also transverse thereto and that each gripper (26) is displaceable transverse to the delivery direction (A) relative to the other grippers (26) of the same gripping device (25).

9. A device according to claim 7 or 8, characterised in that the grippers (26) of each gripping device (25) are pivotable as one by virtue of a pivot drive (31) about a pivot axis (30) parallel to the plane of the conveying belt (1).

10. A device according to claim 9, characterised in that a guide (27) is attached for each gripper (26) of the gripping device (25) at the pivot axis (30) in order to guide the lifting and lowering movement of the gripper (26) transverse to the pivot axis (30) and that each gripper (26) is allocated a dedicated lifting motor (28).

11. A device according to one of claims 6 to 10, characterised in that the conveying belt (1) is connected to a decoder (21) which is connected to the control device (20).

12. A device according to one of claims 6 to 11, characterised in that the movement of the conveying belt (1), the pivot movement of the pivot axis (30), the lifting movements of the grippers (26) and the movement of the group forming chambers (5) are coordinated by virtue of the control device (20).

## Revendications

1. Procédé de formation de groupes (7) de produits alimentaires en forme de disques (3), en particulier de biscuits, disposés à plat côte à côte, dans des chambres (5) de formation de groupes à partir d'un tapis (2) de disques (3) juxtaposés, entraîné en continu dans une direction de transport (A), caractérisé en ce que la situation des disques (3) dans le tapis (2) est détectée au moyen d'un détecteur (4, 19) et mémorisée, en ce que les disques (3) sont saisis individuellement, en aval du détecteur (4, 19) dans la direction de transport (A), dans plusieurs postes successifs (B, C, D, E), et sont transportés dans les chambres (5) de formation de groupes, de telle sorte que, dans la direction de transport (A), la quantité des disques (3) formant le tapis (2) diminue et la quantité des disques (3) contenus dans les chambres (5) de formation de groupes augmente.

2. Procédé selon la revendication 1, caractérisé en ce que les disques (3) sont saisis pendant leur transport dans la direction de transport (A).

3. Procédé selon la revendication 1 ou 2, caractérisé en ce que la quantité dont le nombre de disques (3) diminue dans le tapis (2) correspond exactement à la quantité dont leur nombre augmente dans les chambres (5) de formation de groupes.

4. Procédé selon l'une quelconque des revendications 1 a 3, caractérisé en ce que, dans un poste (B), plusieurs disques individuels (3) du tapis (2) sont saisis à des instants différents, puis sont transportés ensemble vers les chambres (5) de formation de groupes et y sont déposés simultanément.

5. Procédé selon l'une quelconque des revendications 1 à 4, caractérisé en ce que les disques (3) sont soulevés aprés avoir été saisis.

6. Dispositif pour l'exécution du procédé selon la revendication 1, comprenant une bande transporteuse (1) en mouvement continu dans une direction de transport (A) pour le transport d'un tapis (2) de produits alimentaires en forme de disques (3), en particulier de biscuits, disposés côte à côte, ainsi que des chambres (5) de formation de groupes pour la formation de groupes (7) des disques (3), caractérisé en ce qu'il est disposé, au-dessus de la bande transporteuse (1), un détecteur (4, 19) pour déterminer la position des disques individuels (3) sur la bande (1), en ce qu'il est disposé successivement, en aval du détecteur (4, 19) dans la direction de transport (A), des dispositifs de préhension (25) dans plusieurs postes successifs (B, C, D, E), pour saisir les disques (3) en mouvement continu dans la direction de transport (A) et pour les transporter dans les chambres (5) de formation de groupes, les dispositifs de préhension (25) étant commandés par un dispositif de commande (20) qui est relié au détecteur (4, 19).

7. Dispositif selon la revendication 6, caractérisé en ce que chaque dispositif de préhention (25) contient plusieurs éléments preneurs (26) qui saisissent chacun un disque individuel (3), et en ce que les éléments preneurs (26) peuvent être amenés ensemble dans une position au-dessus des chambres (5) de formation de groupes.

8. Dispositif selon la revendication 7, caractérisé en ce que le détecteur (4, 19) est réalisé en vue de la détermination de la position des disques (3) sur la bande (1), aussi bien dans la direction de transport (A) que perpendiculairement à celle-ci, et en ce que chaque élément preneur (26) est déplaçable perpendiculairement à la direction de transport (A) par rapport aux autres éléments preneurs (26) du même dispositif de préhension (25).

9. Dispositif selon la revendication 7 ou 8, caractérisé en ce que les éléments preneurs (26) de chaque dispositif de préhension (25) peuvent pivoter ensemble autour d'un axe de rotation (30) paralléle au plan de la bande transporteuse (1), sous l'action d'un mécanisme d'entraînement en mouvement pivotant (31).

10. Dispositif selon la revendication 9, caractérisé en ce que, pour chaque élément preneur (26) du dispositif de préhension (25), un guide (27) est monté sur l'axe de rotation (30) pour guider le mouvement de levage et d'abaissement de l'élément preneur (26) perpendiculairement à l'axe de rotation (30), et en ce qu'il est adjoint, à chaque élément preneur (26), son propre moteur de levage (28).

11. Dispositif selon l'une quelconque des revendications 6 à 10, caractérisé en ce que la bande transporteuse (1) est reliée à un décodeur (21) et celui-ci est relié au dispositif de commande (20).

12. Dispositif selon l'une quelconque des revendications 6 à 11, caractérisé en ce que le mouvement de la bande transporteuse (1), le mouvement oscillant de l'axe de rotation (30), les mouvements de levage des preneurs (26) et le mouvement des chambres (5) de formation de groupes sont coordonnés par le dispositif de commande (20).
